# EUROPEAN PATENT SPECIFICATION

(11) **EP 4 063 107 B1**
(45) Date of publication and mention of the grant of the patent: **03.12.2025**
(21) Application number: 21204966.2
(22) Date of filing: 27.10.2021
(51) Int. Cl.: B29D 99/00, B29C 70/44, B29C 33/30

(54) **FIBER REINFORCED COMPOSITE MATERIAL MOLDING METHOD AND SYSTEM COMPRISING A FIBER REINFORCED COMPOSITE MATERIAL MOLDING APPARATUS AND FIBER BASE MATERIAL.**
VERFAHREN ZUM FORMEN EINES FASERVERSTÄRKTEN VERBUNDSTOFFMATERIALS, UNDSYSTEM MIT EINER VORRICHTUNG ZUM FORMEN EINES FASERVERSTÄRKTEN VERBUNDSTOFFMATERIALS UND EINEM FASERBASISMATERIAL.
PROCÉDÉ DE MOULAGE DE MATÉRIAU COMPOSITE RENFORCÉ PAR DES FIBRES, ET SYSTÈME COMPRENANT UN APPAREIL DE MOULAGE DE MATÉRIAU COMPOSITE RENFORCÉ PAR DES FIBRES ET UN MATÉRIAU DE BASE EN FIBRES.

(30) Priority: 25.03.2021 JP 2021051308
(43) Date of publication of application: 28.09.2022
(73) Proprietor: Mitsubishi Heavy Industries, Ltd., Tokyo 100-8332 (JP)
(72) Inventor: Shimono, Kodai, Tokyo, 100-8332 (JP); Yamato, Homare, Tokyo, 100-8332 (JP); Shimizu, Masahiko, Tokyo, 100-8332 (JP); Mano, Shoya, Tokyo, 100-8332 (JP); Tokutomi, Hiroshi, Tokyo, 100-8332 (JP)
(74) Representative: Hoffmann Eitle

(56) References cited:
- WO-A1-2020/114565

## Description

### BACKGROUND OF THE INVENTION

### 1. FIELD OF THE INVENTION

The present disclosure relates to a fiber reinforced composite material molding method and a system comprising a fiber reinforced composite material molding apparatus and fiber base material.

In the related art, a molding apparatus for molding a fiber reinforced composite material such as fiber reinforced plastic of resin reinforced with a fiber base material such as glass fiber or a carbon fiber is known (see the Publication of Japanese Patent No. 6216134, for example). The Publication of Japanese Patent No. 6216134 discloses that a clearance between a die and a molding jig is set to have a dimension corresponding to a desired plate thickness of a molded article (composite material) when the fiber base material disposed in the die is compressed with the molding jig. According to the publication of Japanese Patent No. 6216134, it is possible to sufficiently press the fiber base material with the molding jig and to sufficiently compress the fiber base material in the clearance through adjustment of the clearance between the die and the molding jig.

WO 2020/114565 A1 discloses a manufacturing method for producing a fiber reinforced composite material with the steps of providing a mould having an elongated mould surface, placing a movable insert on the mould surface, in a first position, with the insert in the first position, a first blade body having a first length, placing the insert on the mould surface, in a second position, and forming, with the insert in the second position, a second blade body having a second length different to the first length.

### BRIEF SUMMARY OF THE INVENTION

However, in a case in which resin transfer molding (RTM) of impregnating the fiber base material with the resin material using a pressure difference between a vacuum pressure and an atmospheric pressure is applied, there is a probability that an appropriate composite material cannot be molded merely by a method of adjusting the clearance in the plate thickness direction of the fiber base material. In a case in which a clearance is generated between the die and the molding jig at an end portion of the fiber base material, for example, the resin material injected into the clearance is solidified, and a part (resin rich part) including only the resin material is formed.

If the part including only the resin material is formed, it is necessary to perform an operation of appropriately removing the part including only the resin material after the composite material is molded, which leads to an increase in manufacturing cost of the composite material. Also, the part including only the resin material does not include the fiber base material and thus easily cracks, and if cracking occurs in the part, there is a probability that a damage occurs even in another part of the composite material including the fiber base material.

The present disclosure has been made in view of such circumstances, and an object thereof is to provide a fiber reinforced composite material molding method and a fiber reinforced composite material molding apparatus capable of curbing formation of a part including only a resin material at an end portion of a fiber base material in a composite material and preventing an increase in manufacturing cost of the composite material and occurrence of any damage.

A fiber reinforced composite material molding method according to an aspect of the present disclosure is a fiber reinforced composite material molding method for molding a composite material with a first mold and a second mold, the first mold including a molding surface extending in a first direction, the second mold being disposed in the first mold such that the second mold is movable in the first direction and including a contact surface that is brought into contact with the molding surface, the method including: a disposing process of disposing the second mold in the first mold such that the contact surface is brought into contact with the molding surface; a first placing process of placing a fiber base material on the molding surface of the first mold in which the second mold is disposed; a measurement process of measuring a gap formed between the second mold and a second end portion of the first mold in a state in which the fiber base material is in contact with a first end portion of the first mold in the first direction and the second mold is in contact with the fiber base material; an insertion process of inserting, between the second mold and the second end portion of the first mold, a spacer with a length in the first direction in accordance with the gap measured in the measurement process; a tightly closing process of sealing the fiber base material in the first mold with a tightly closing member and forming a tightly closed space; and an injection process of injecting a resin material into the tightly closed space formed in the tightly closing process.

A system comprising a fiber reinforced composite material molding apparatus and a fiber base material according to an aspect of the present disclosure is a fiber reinforced composite material molding apparatus including a first mold that includes a molding surface, which extends in a first direction, on which a fiber base material is placed; a second mold that is disposed in the first mold such that the second mold is movable in the first direction, the second mold including a contact surface that is brought into contact with the molding surface; a spacer that is inserted into a gap formed between the second mold and a second end portion of the first mold in a state in which the fiber base material is in contact with a first end portion of the first mold in the first direction and the second mold is in contact with the fiber base material, the spacer having a length in the first direction in accordance with the gap; a tightly closing member that seals the fiber base material in the first mold and forms a tightly closed space; and a resin injecting portion that injects a resin material to the fiber base material sealed in the tightly closed space.

According to the present disclosure, it is possible to provide a fiber reinforced composite material molding method and a fiber reinforced composite material molding apparatus capable of curbing formation of a part including only a resin material at an end portion of a fiber base material in a composite material and preventing an increase in manufacturing cost of the composite material and occurrence of any damage.

### BRIEF DESCRIPTION OF THE SEVERAL VIEWS OF THE DRAWINGS

FIG. 1 is an exploded perspective view illustrating the molding apparatus according to the embodiment of the present disclosure.
FIG. 2 is a perspective view illustrating the molding apparatus according to the embodiment of the present disclosure and illustrates a state in which fiber base materials are placed in a first mold.
FIG. 3 is a perspective view illustrating an example of a composite material manufactured by the molding apparatus illustrated in FIG. 1.
FIG. 4 is an A-A arrow sectional view of the molding apparatus illustrated in FIG. 2.
FIG. 5 is a B-B arrow sectional view of the molding apparatus illustrated in FIG. 2.
FIG. 6 is a flowchart illustrating the composite material molding method according to the present embodiment.
FIG. 7 is an A-A arrow sectional view of the molding apparatus illustrated in FIG. 2 and illustrates the state in which the second mold is disposed in the first mold.
FIG. 8 is an A-A arrow sectional view of the molding apparatus illustrated in FIG. 2 and illustrates the state in which the fiber base material is placed in the first mold.
FIG. 9 is a B-B arrow sectional view of the molding apparatus illustrated in FIG. 2 and illustrates a state in which the second mold is in contact with the fiber base material.
FIG. 10 is a diagram illustrating a state in which a portion between the second mold and the fiber base material is filled with a filling material with the end surface of the second mold and the second end surface of the first mold in contact with each other.
FIG. 11 is a sectional view illustrating a modification of the molding apparatus.

### DETAILED DESCRIPTION OF THE INVENTION

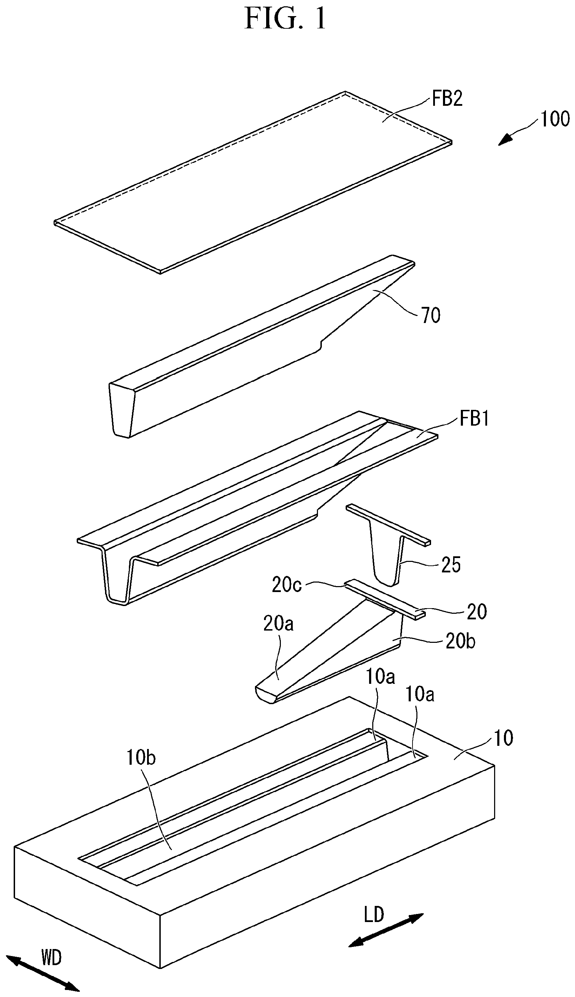

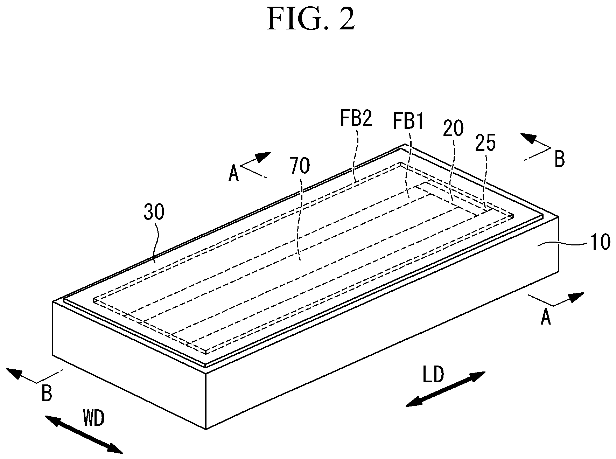

Hereinafter, a molding apparatus (fiber reinforced composite material molding apparatus) 100 and a fiber reinforced composite material molding method using the same according to an embodiment of the present disclosure will be described with reference to the drawings. FIG. 1 is an exploded perspective view illustrating the molding apparatus 100 according to the embodiment of the present disclosure. FIG. 2 is a perspective view illustrating the molding apparatus 100 according to the embodiment of the present disclosure and illustrates a state in which fiber base materials FB1 and FB2 are placed in a first mold 10.

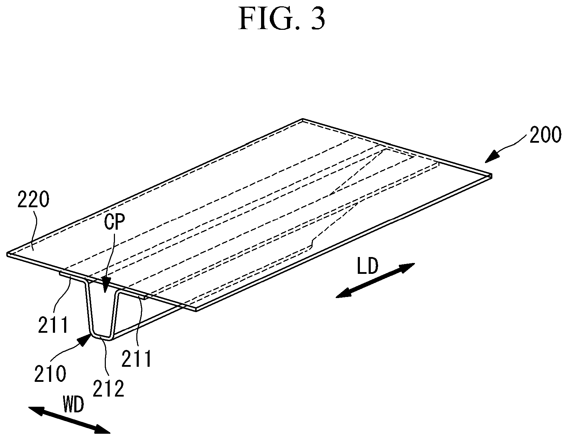

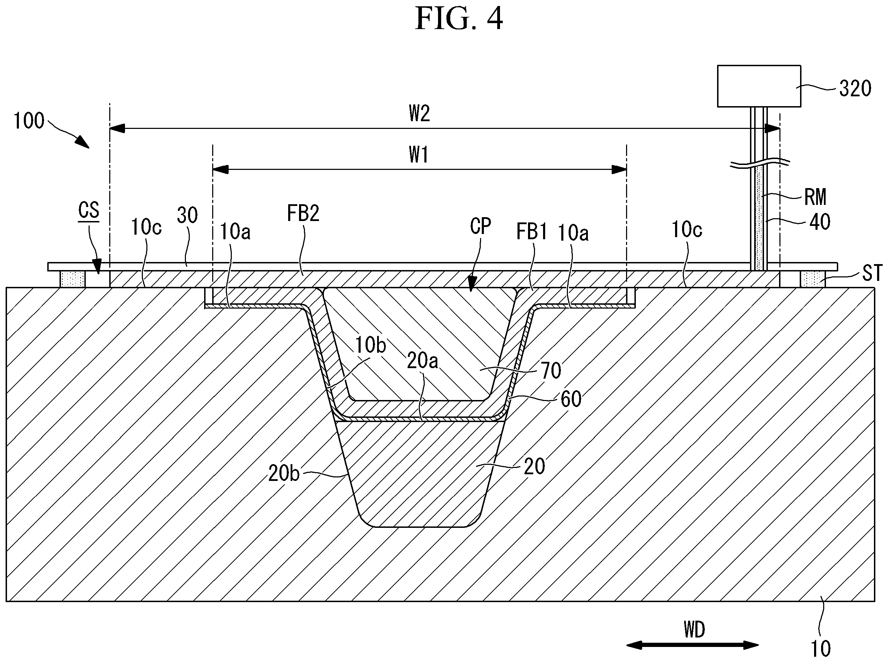

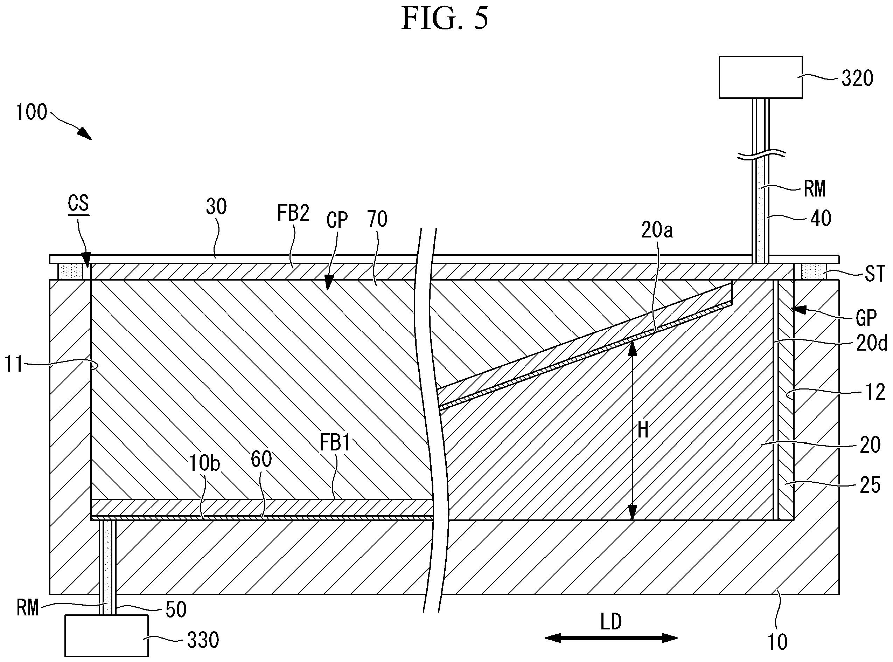

FIG. 3 is a perspective view illustrating an example of a composite material 200 manufactured by the molding apparatus 100 illustrated in FIG. 1. FIG. 4 is an A-A arrow sectional view of the molding apparatus 100 illustrated in FIG. 2. FIG. 5 is a B-B arrow sectional view of the molding apparatus 100 illustrated in FIG. 2.

The molding apparatus 100 according to the present embodiment is an apparatus that executes infusion molding in which the fiber base material FB1 and the fiber base material FB2 disposed in the first mold 10 and a second mold 20, which are lower molds, are sealed in a tightly closed space CS using a bagging film 30 as an upper mold, the tightly closed space CS is filled with a resin material RM, and the resin material RM is cured through pressure reduction in the tightly closed space CS. The infusion molding is one of methods such as resin transfer molding (RTM) and resin infusion in which fiber base materials are impregnated with a resin using a pressure difference between a vacuum pressure and an atmospheric pressure.

The molding apparatus 100 according to the present embodiment molds the composite material (fiber reinforced composite material) 200 illustrated in FIG. 3 in an example. The composite material 200 illustrated in FIG. 3 is a stringer used as a reinforcing material that reinforces an aircraft body. The composite material 200 is a member having a long shape extending in a longitudinal direction (first direction) LD and having a projecting center portion in a width direction WD. The width direction (second direction) WD is a direction that perpendicularly intersects the longitudinal direction LD in a plane in which the composite material 200 is placed.

As illustrated in FIG. 3, the composite material 200 is a member in which a first member 210 obtained by impregnating the fiber base material FB1 with a resin material and a second member 220 obtained by impregnating the fiber base material FB2 with a resin material are integrated and cured. The first member 210 includes a pair of flat portions 211 disposed on both end sides in the width direction WD and formed into a flat shape and a projecting portion 212 connected to the pair of flat portions 211 and having a projecting center portion in the width direction WD. The second member 220 is a member with a flat shape or with a predetermined curvature disposed in the longitudinal direction LD and the width direction WD.

The fiber base material FB1 and the fiber base material FB2 are members obtained by laminating, in a plurality of layers, sheets formed of a reinforcing fiber material such as carbon fiber or glass fiber. Also, the fiber base material FB1 and the fiber base material FB2 may be prepregs partially impregnated with the resin material RM in advance. The resin material RM is a thermosetting resin material such as an epoxy resin, unsaturated polyester, vinyl ester, phenol, cyanate ester, or polyimide.

Although the resin material RM is assumed to be a thermosetting resin material in the following description, a thermoplastic resin, for example, may be used. Examples of the thermoplastic resin include polyether ether ketone (PEEK), polyethylene terephthalate (PET), polybutylene terephthalate (PBT), nylon 6 (PA6), nylon 66 (PA66), polyphenylene sulfide (PPS), polyether imide (PEI), or polyether ketone ketone (PEKK).

The composite material 200 illustrated in FIG. 3 includes a recessed portion CP defined by the flat portions 211 and the projecting portion 212 and extending in the longitudinal direction LD. The molding apparatus 100 according to the present embodiment uses a core portion 70 that is a core inserted into the recessed portion CP in order to mold the composite material 200 with the recessed portion CP. It is possible to maintain the shape of the recessed portion CP as a constant shape during molding of the composite material 200 by molding the composite material 200 in a state in which the core portion 70 is inserted into the recessed portion CP.

As illustrated in FIGS. 1 and 2, the molding apparatus 100 according to the present embodiment includes the first mold 10, the second mold 20, a spacer 25, the bagging film (tightly closing member) 30, a suctioning line (suctioning portion) 40, a resin injection line (resin injecting portion) 50, a resin dispersing medium (sheet) 60, and the core portion 70.

The first mold 10 is a mold in which the fiber base material FB1 is disposed to mold the fiber base material FB1 into a desired shape. As illustrated in FIGS. 1 and 4, the first mold 10 is a female mold in which a pair of molding surfaces (first molding surfaces) 10a, a molding surface 10b, and a pair of molding surfaces (second molding surfaces) 10c are formed.

The pair of molding surfaces 10a are molding surfaces, on which the fiber base material FB1 is disposed, which extend in the width direction WD. The molding surface 10b is a molding surface, on which the fiber base material FB1 is disposed, which has a shape recessed downward from the molding surfaces 10a. The pair of molding surfaces 10a are disposed at both ends of the molding surface 10b in the width direction WD. The molding surfaces 10a and the molding surface 10b are molding surfaces on which the fiber base material FB1 with a first width W1 in the width direction WD that perpendicularly intersects the longitudinal direction LD is disposed. The pair of molding surfaces 10c are molding surfaces, on which the fiber base material FB2 is disposed, which extend in the width direction WD.

As illustrated in FIG. 4, the fiber base material FB1 has the first width W1 in the width direction WD and is placed along the pair of molding surfaces 10a and the molding surface 10b. The fiber base material FB2 has the second width W2 that is wider than the first width W1 in the width direction WD and is placed along the pair of molding surfaces 10c. As illustrated in FIG. 5, the first mold 10 accommodates the fiber base material FB1 in a region between a first end surface (first end portion) 11 and a second end surface (second end portion) 12 in the longitudinal direction LD.

The second mold 20 is a mold disposed in the first mold 10 such that the second mold 20 is movable in the longitudinal direction LD for molding the end portion of the fiber base material FB1 in the longitudinal direction LD into a desired shape. As illustrated in FIG. 1, the second mold 20 includes a molding surface 20a, a contact surface 20b, and a support portion 20c.

The molding surface 20a is a surface for molding the fiber base material FB1 through contact with the end portion of the fiber base material FB1 in the longitudinal direction LD. As illustrated in FIG. 5, the molding surface 20a is an inclined surface inclined such that a height H from a lower end gradually decreases from the second end surface 12 to the first end surface 11.

The contact surface 20b is a surface that is brought into contact with the molding surface 10b of the first mold 10 in a state in which the second mold 20 is disposed in the first mold 10. As illustrated in FIG. 4, the contact surface 20b has a shape corresponding to the molding surface 10b in the width direction WD. Therefore, the entire region of the contact surface 20b is brought into contact with the molding surface 10b of the first mold 10 in the state in which the second mold 20 is disposed in the first mold 10.

The support portion 20c is a member disposed to extend in the width direction WD in the state in which the second mold 20 is disposed in the first mold 10. The support portion 20c has both end portions in the width direction WD supported by the pair of molding surfaces 10a of the first mold 10 in the state in which the second mold 20 is disposed in the first mold 10.

Since the support portion 20c is disposed on the pair of molding surfaces 10a, it is possible to smoothly mold the end surface of the fiber base material FB1 by causing the support portion 20c to move in the longitudinal direction LD and pressing the support portion 20c against the end surface of the fiber base material FB1 in the longitudinal direction LD.

Although the entire second mold 20 including a part that is brought into contact with the fiber base material FB1 via a resin dispersing medium 60 is formed of a metal material such as aluminum alloy, another aspect is also conceivable. For example, a part of the second mold 20 that is brought into contact with the fiber base material FB1 via the resin dispersing medium 60 may be formed of a member with a thermal expansion property or stretchability (for example, silicone or foamed silicone).

It is possible to cause the second mold 20 to stretch to follow a change in shape of the fiber base material FB1 even in a case in which the shape of the fiber base material FB1 changes due to compression or thermal expansion in the injection process of injecting the resin material RM into the tightly closed space CS, the following curing process, or the like, by forming the part of the second mold 20 that is brought into contact with the fiber base material FB1 using a member with stretchability.

Note that only the part of the second mold 20 that is brought into contact with the fiber base material FB1 via the resin dispersing medium 60 may be a member with stretchability, while the other part may be formed of a metal material. Alternatively, the entire second mold 20 including the part that is brought into contact with the fiber base material FB1 via the resin dispersing medium 60 may be formed of a member with stretchability.

The spacer 25 is a plate-shaped member that is inserted into a gap GP formed between an end surface 20d of the second mold 20 and the second end surface 12 of the first mold 10 as illustrated in FIG. 5. The gap GP is formed between the end surface 20d of the second mold 20 and the second end surface 12 of the first mold 10 in a state in which the fiber base material FB1 is in contact with the first end surface 11 of the first mold 10 in the longitudinal direction LD and the second mold 20 is in contact with the fiber base material FB1.

The gap GP formed between the end surface 20d of the second mold 20 and the second end surface 12 of the first mold 10 has an arbitrary interval in accordance with an individual difference of the fiber base material FB1 or an individual difference of the first mold 10. The spacer 25 is required to appropriately adjust the gap GP regardless of the thickness (the length in the longitudinal direction LD) of the gap GP formed. Specifically, it is necessary to adjust the gap GP such that a predetermined interval is formed in consideration of thermal expansion or the like caused by heating the resin material RM in the curing process, which will be described later. Therefore, a plurality of types of spacers 25 with mutually different thicknesses are prepared, and a spacer 25 with a length in the longitudinal direction LD in accordance with the gap GP is selected such that the gap GP has a predetermined interval and is then inserted into the gap GP.

Also, a plurality of plate materials with specific thicknesses that are sufficiently thinner than the thickness of the gap GP that is typically formed may be prepared as the spacers 25. In this case, a plurality of spacers 25 with specific thicknesses are combined such that the thickness thereof conforms to the thickness of the gap GP to achieve the thickness that conforms to the gap GP, and the plurality of spacers 25 are inserted into the gap GP.

The bagging film 30 is a member that seals the fiber base material FB1 and the fiber base material FB2 in the first mold 10 and forms the tightly closed space CS. The bagging film 30 is formed of a resin material containing nylon as a main constituent, for example. The bagging film 30 is bonded to the first mold 10 with a sealant tape SP to cover the entire periphery of the molding surfaces 10a, the molding surface 10b, and the molding surfaces 10c of the first mold 10.

The suctioning line 40 is a pipe body having one end connected to a suctioning source 320 such as a vacuum pump and the other end connected to the tightly closed space CS as illustrated in FIGS. 4 and 5. The suctioning line 40 can discharge air that is present in the tightly closed space CS from the tightly closed space CS and reduce the pressure in the tightly closed space CS to a pressure (for example, a vacuum pressure) that is lower than an atmospheric pressure through connection between the suctioning source 320 and the tightly closed space CS.

The resin injection line 50 is a pipe body for injecting the resin material RM to the fiber base material FB1 sealed in the tightly closed space CS, the pressure in which has been reduced by the suctioning line 40, as illustrated in FIG. 5. The resin injection line 50 has one end connected to a supply source 330 that supplies the resin material RM and the other end connected to the tightly closed space CS. The resin injection line 50 can supply the resin material RM from the supply source 330 to the tightly closed space CS, the pressure in which has been reduced by the suctioning line 40, through connection between the supply source 330 and the tightly closed space CS.

The resin dispersing medium 60 is a sheet-shaped medium for supplying the resin material RM supplied from the resin injection line 50 to the tightly closed space CS while dispersing the resin material RM to the entire fiber base material FB1. The resin dispersing medium 60 has an net-shaped internal structure that is a structure in which the resin material RM can pass therethrough, for example. Therefore, the resin material RM supplied to the tightly closed space CS, the pressure in which has been reduced by the suctioning line 40, passes through the inside of the resin dispersing medium 60 and is dispersed to the entire surface of the fiber base material FB1, and the fiber base material FB1 is then impregnated with the resin material RM.

The resin dispersing medium 60 is a sheet formed of nylon or polyester, for example, and having releasability from the fiber base material FB1. Since the resin dispersing medium 60 has releasability, it is possible to easily remove the resin dispersing medium 60 from the fiber base material FB1 after the molding of the composite material 200 is completed.

Note that the resin dispersing medium 60 may not be disposed between the fiber base material FB1 and the first mold 10. In this case, groove portions that promote dispersion of the resin material RM may be formed in the molding surfaces 10a, the molding surface 10b, and the molding surfaces 10c of the first mold 10.

The core portion 70 is a member disposed in a state in which the core portion 70 is in contact with the fiber base material FB1 disposed in the first mold 10 with no gap. The core portion 70 is a member having a shape corresponding to the recessed portion CP and formed into a long shape in the longitudinal direction LD. The core portion 70 is a member with hardness with which a constant shape can be held even in a case in which the tightly closed space CS is brought into a vacuum state.

The core portion 70 is formed of a foam material such as polyethylene, polypropylene, polyvinyl chloride, polymethacrylimide, balsa wood, or a carbon foam body. Also, the core portion 70 may be a hollow member made of rubber such as bladder formed using a material, to which an inner pressure due to an atmospheric pressure is applied during molding, which is vacuum-suctioned to shrink such that the material can be pulled out after the molding.

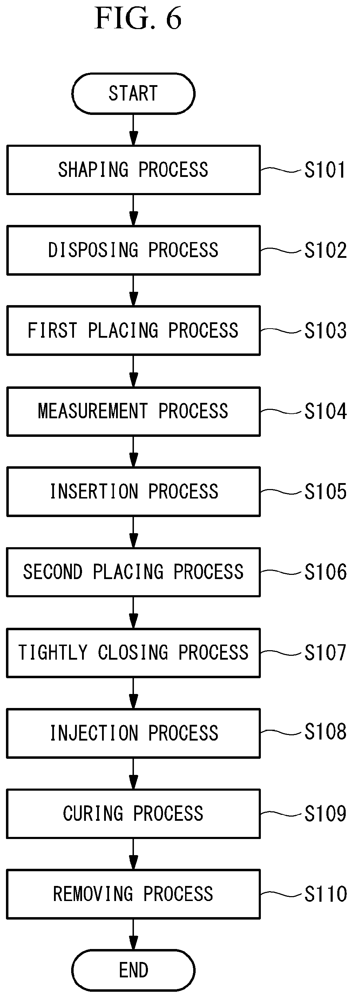

Next, a composite material molding method according to the present embodiment will be described with reference to the drawings. FIG. 6 is a flowchart illustrating the composite material molding method according to the present embodiment.

In Step S101 (shaping process), the fiber base material FB1 formed into a flat shape is shaped with a shaping mold (not illustrated) to obtain a shape corresponding to the molding surfaces 10a and the molding surface 10b of the first mold 10.

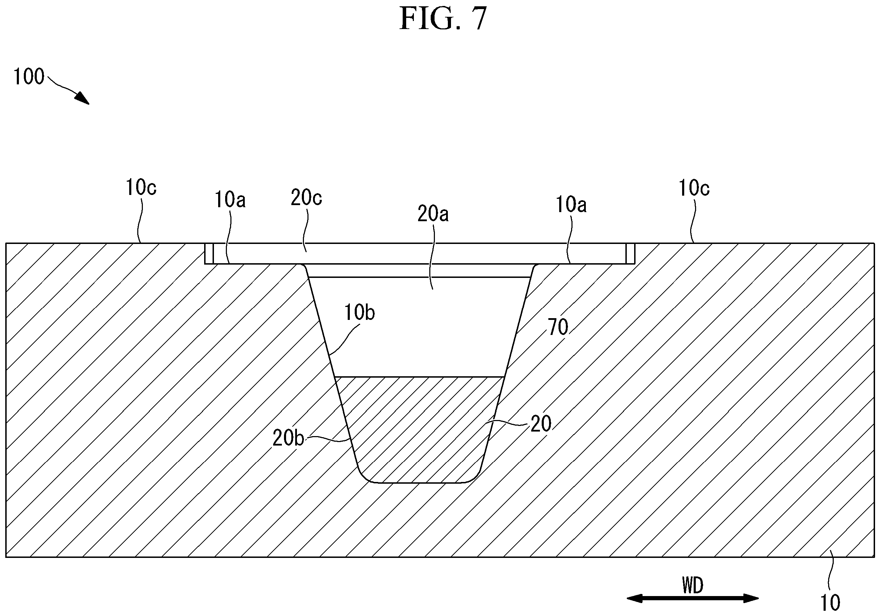

In Step S102 (disposing process), the second mold 20 is disposed in the first mold 10 such that the contact surface 20b is brought into contact with the molding surface 10b. If the second mold 20 is disposed in the first mold 10, then the state illustrated in FIG. 7 is achieved. FIG. 7 is an A-A arrow sectional view of the molding apparatus 100 illustrated in FIG. 2 and illustrates the state in which the second mold 20 is disposed in the first mold 10.

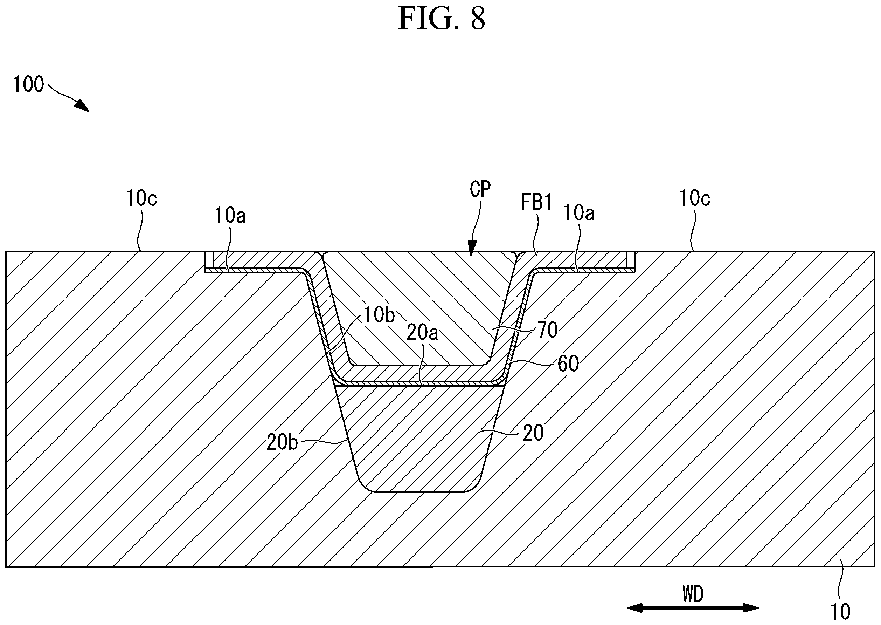

In Step S103 (first placing process), the fiber base material FB1 is placed on the molding surfaces 10a and the molding surface 10b of the first mold 10 in which the second mold 20 is disposed. When the fiber base material FB1 is placed on the first mold 10, the resin dispersing medium 60 is disposed between the fiber base material FB1 and the first mold 10. If the fiber base material FB1 is placed in the first mold 10, then the state illustrated in FIG. 8 is achieved. FIG. 8 is an A-A arrow sectional view of the molding apparatus 100 illustrated in FIG. 2 and illustrates the state in which the fiber base material FB1 is placed in the first mold 10.

In Step S104 (measurement process), the gap GP formed between the second mold 20 and the second end surface 12 of the first mold 10 is measured in a state in which the fiber base material FB1 is in contact with the first end surface 11 of the first mold 10 in the longitudinal direction LD and the second mold 20 is in contact with the fiber base material FB1.

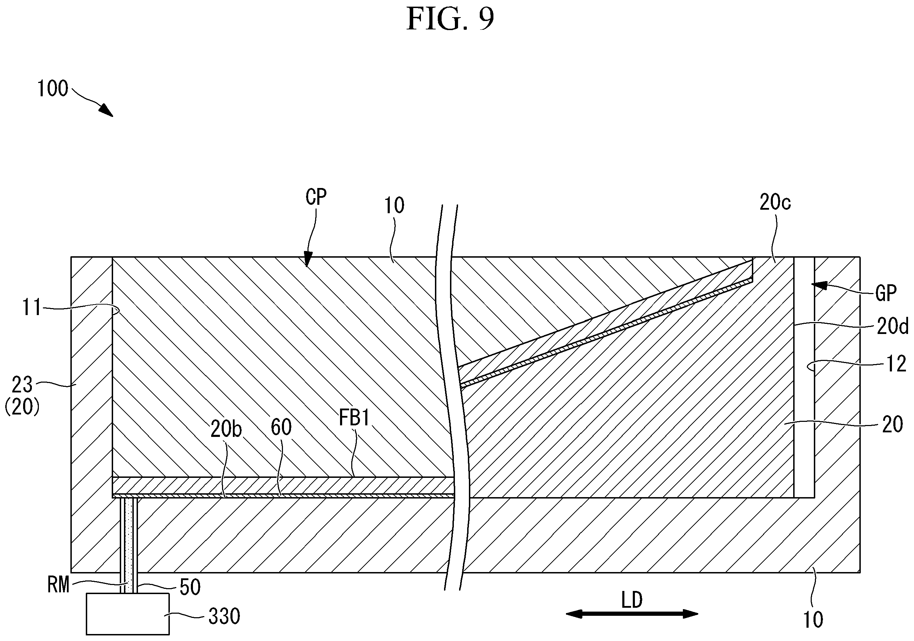

In Step S104, an operator grips the support portion 20c of the second mold 20, causes the second mold 20 to move in the longitudinal direction LD toward the first end surface 11, and achieves the state illustrated in FIG. 9. FIG. 9 is a B-B arrow sectional view of the molding apparatus 100 illustrated in FIG. 2 and illustrates a state in which the second mold 20 is in contact with the fiber base material FB1.

As illustrated in FIG. 9, if the state in which the second mold 20 is in contact with the fiber base material FB1 is achieved, then the gap GP is formed between the end surface 20d of the second mold 20 and the second end surface 12 of the first mold 10. The operator measures the length of the gap GP in the longitudinal direction LD using a measurement instrument (not illustrated).

Note that although the gap GP formed between the second mold 20 and the second end surface 12 of the first mold 10 is directly measured in the state in which the fiber base material FB1 is in contact with the first end surface 11 of the first mold 10 in the longitudinal direction LD and the second mold 20 is in contact with the fiber base material FB1 in the above description, another aspect is also conceivable.

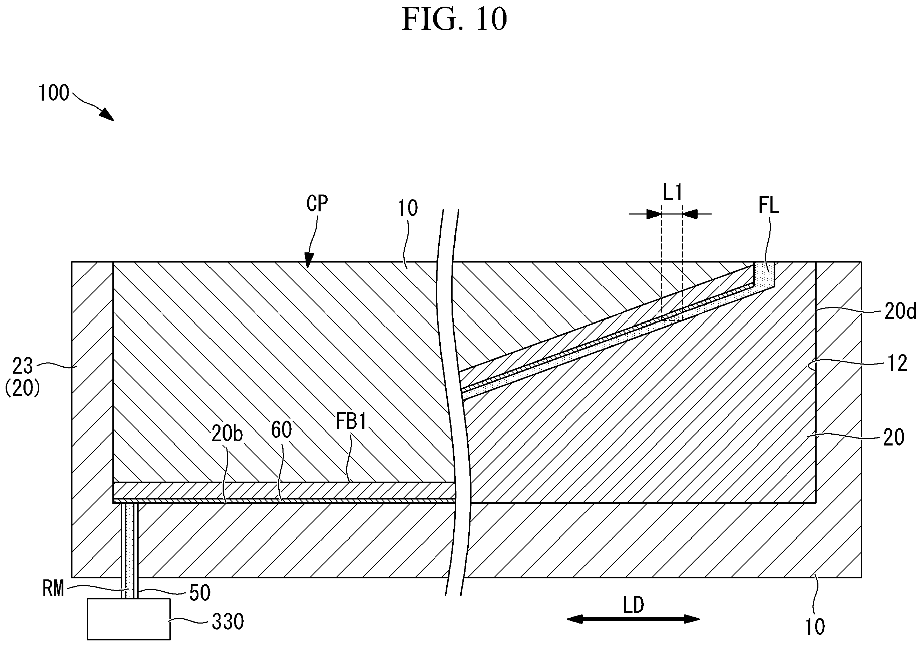

For example, the length corresponding to the gap GP may be indirectly measured in a state in which the end surface 20d of the second mold 20 is brought into contact with the second end surface 12 of the first mold 10. FIG. 10 is a diagram illustrating a state in which a portion between the second mold 20 and the fiber base material FB1 is filled with a filling material FL with the end surface 20d of the second mold 20 and the second end surface 12 of the first mold 10 in contact with each other. The filling material FL is a material that is deformed through an application of a predetermined force and can hold the shape after the deformation, such as a clay or a curable resin.

As illustrated in FIG. 10, the portion between the second mold 20 and the fiber base material FB1 is filled with the filling material FL little by little in a state in which the end surface 20d of the second mold 20 and the second end surface 12 of the first mold 10 are brought into contact with each other, and a state in which the fiber base material FB1 is in contact with the first end surface 11 of the first mold 10, the end surface 20d of the second mold 20 and the second end surface 12 of the first mold 10 are in contact with each other, and the portion between the second mold 20 and the fiber base material FB1 is filled with the filling material FL is achieved.

If the state illustrated in FIG. 10 is achieved, then the fiber base material FB1 is removed from the first mold 10, and a length L1 of the filling material FL in the longitudinal direction LD is measured using a measurement instrument (not illustrated). The length L1 measured using the measurement instrument is the same as the length of the gap GP in the longitudinal direction LD illustrated in FIG. 9. Therefore, it is possible to indirectly measure the length corresponding to the gap GP through the measurement of the length L1.

In Step S105 (insertion process), the spacer 25 with the length in the longitudinal direction LD in accordance with the gap GP measured in the measurement process (S104) is inserted between the end surface 20d of the second mold 20 and the second end surface 12 of the first mold 10. The state illustrated in FIG. 5 is achieved by the insertion of the spacer 25 into the gap GP. In the state illustrated in FIG. 5, a state in which a predetermined interval is formed between the fiber base material FB1 and the spacer 25 in consideration of thermal expansion due to heating of the resin material RM in the curing process that will be described later is achieved.

In Step S106 (second placing process), the fiber base material FB2 is placed on the molding surfaces 10c of the first mold 10 in which the fiber base material FB1 has been placed.

In Step S107 (tightly closing process), the fiber base material FB1 and the fiber base material FB2 are sealed in the first mold 10, and the tightly closed space CS is formed. Specifically, the bagging film 30 is bonded to the first mold 10 with the sealant tape ST to cover the entire periphery of the first mold 10, and the tightly closed space CS is formed. If the tightly closing process in Step S107 is completed, the state illustrated in FIGS. 4 and 5 is achieved.

If the tightly closed space CS is formed in Step S107 (tightly closing process), then a state in which the resin injection line 50 connected to the supply source 330 for the resin material RM and the tightly closed space CS communicate with each other is achieved. Also, if the tightly closed space CS is formed, a state in which the suctioning line 40 connected to the suctioning source 320 and the tightly closed space CS communicate with each other is achieved.

In Step S108 (injection process), air in the tightly closed space CS formed in Step S107 (tightly closing process) is suctioned to reduce the pressure in the tightly closed space CS, and the resin material RM is injected to the fiber base material FB1 and the fiber base material FB2 sealed in the tightly closed space CS. Specifically, the suctioning source 320 is caused to operate, the air that is present in the tightly closed space CS is discharged from the tightly closed space CS via the suctioning line 40, and the pressure in the tightly closed space CS is reduced to a pressure in a vacuum state or substantially in a vacuum state that is lower than the atmospheric pressure.

Thereafter, the supply source 330 is brought into a state in which the supply source 330 can supply the resin material RM to the resin injection line 50, and the resin material RM is injected into the tightly closed space CS using a pressure difference in the resin injection line 50 and in the tightly closed space CS, the pressure in which has been reduced. The resin material RM passes through the inside of the resin dispersing medium 60, is dispersed to the entire surface of the fiber base material FB1, and is then injected to the fiber base material FB1 and the fiber base material FB2. A part of the resin material RM with which the fiber base material FB1 and the fiber base material FB2 are impregnated passes through the fiber base material FB2, is guided to the suctioning line 40, and is discharged as an extra resin material RM to the suctioning line 40.

In Step S108 (injection process), the pressure in the tightly closed space CS is reduced to a pressure in a vacuum state or substantially in a vacuum state, and the fiber base material FB1 and the resin material RM with which the fiber base material FB1 has been impregnated are thus pressurized by the atmospheric pressure.

In Step S109 (curing process), the thermosetting resin material RM injected to the fiber base material FB1 and the fiber base material FB2 in Step S108 (injection process) is heated to a thermosetting temperature or higher using a heating portion (not illustrated), thereby curing the resin material RM.

Note that in a case in which a thermoplastic resin material RM is used, the heating achieved by the heating portion is not performed in Step S109 (curing process). In Step S109, the resin material RM is cooled such that the temperature of the resin material RM becomes sufficiently lower than a softening temperature.

In Step S110 (removing process), the composite material 200 including the resin material RM, the fiber base material FB1, and the fiber base material FB2 cured in Step S109 (curing process) is removed from the first mold 10. Specifically, the sealant tape ST for bonding the bagging film 30 and the first mold 10 is detached, and the bagging film 30 is removed from the first mold 10.

The composite material 200 with the core portion 70 inserted into the recessed portion CP is removed from the first mold from which the bagging film 30 has been removed. Moreover, the core portion 70 is detached from the recessed portion CP of the composite material 200. Through the aforementioned processes, the manufacturing process of the composite material 200 molded with the first mold 10 and the second mold 20 is ended.

Effects and advantages achieved by the molding apparatus 100 according to the present embodiment as described above will be described.

According to the composite material molding method in the present embodiment, the gap GP formed between the end surface 20d of the second mold 20 and the second end surface 12 of the first mold 10 is measured in the measurement process (S104) in the state in which the fiber base material FB1 is in contact with the first end surface 11 of the first mold 10 in the longitudinal direction LD and the molding surface 20a of the second mold 20 is in contact with the fiber base material FB1. The gap GP is formed due to manufacturing errors or the like of the first mold 10 and the fiber base material FB1. If the composite material 200 is molded by injecting the resin material RM to the fiber base material FB1 in a state in which the gap GP does not have an appropriate interval, a part including only the resin material RM is formed in the second end surface 12 of the fiber base material FB1 in the longitudinal direction LD.

Thus, according to the composite material molding method in the present embodiment, the spacer 25 with a length in the longitudinal direction LD in accordance with the measured gap GP is inserted between the end surface 20d of the second mold 20 and the second end surface 12 of the first mold 10 in the insertion process (S105). Since the gap GP is adjusted to have an appropriate interval through the insertion of the spacer 25 into the gap GP, the resin material RM is injected into the tightly closed space CS in a state in which an appropriate interval is formed between the end surface 20d of the second mold 20 and the second end surface 12 of the first mold 10. It is thus possible to curb formation of a part including only the resin material RM in the second end surface 12 of the fiber base material FB1 in the longitudinal direction LD in the composite material.

Also, it is possible to cause the second mold 20 to stretch to follow a change in shape of the fiber base material FB1 even in a case in which the shape of the fiber base material FB1 changes in the injection process (S108) or the following curing process (S109), by forming the part of the second mold 20 that is brought into contact with the fiber base material FB1 using a member with stretchability. Therefore, it is possible to prevent the gap GP that does not have an appropriate interval from being formed between the end surface 20d of the second mold 20 and the second end surface 12 of the first mold 10 in the injection process (S108) and the following curing process (S109).

### [Other embodiments]

Although the molding apparatus 100 is adapted such that the spacer 25 is inserted into the gap GP in the longitudinal direction LD in consideration of an individual difference of the fiber base material FB1 or an individual difference of the first mold 10 in the longitudinal direction LD in the above description, an individual difference of the fiber base material FB1 or an individual difference of the first mold 10 in the width direction WD may be further taken into consideration.

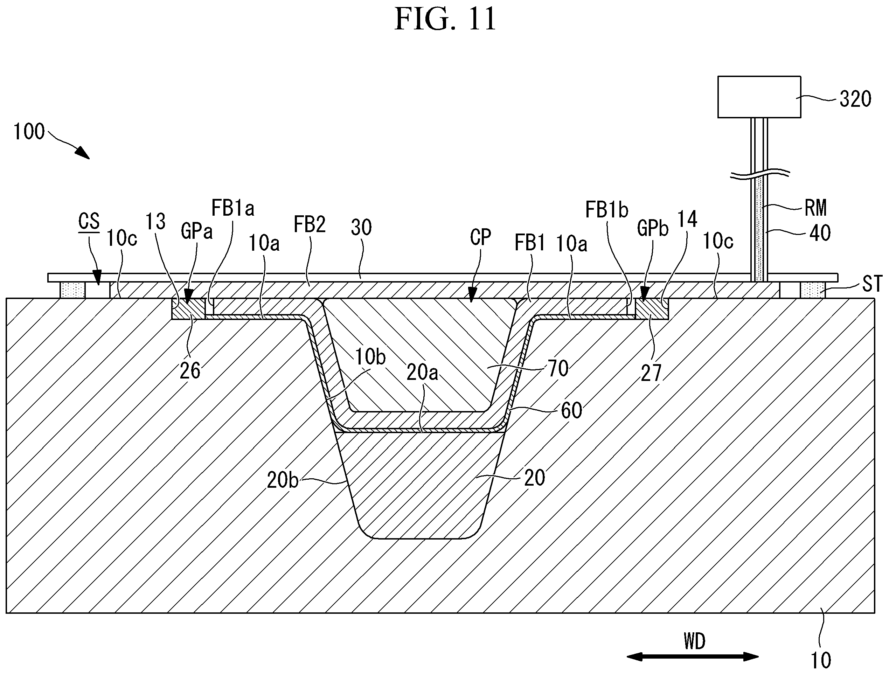

FIG. 11 is a sectional view illustrating a modification of the molding apparatus 100 and is an A-A arrow sectional view of the molding apparatus illustrated in FIG. 2. As illustrated in FIG. 11, a gap GPa is formed between an end surface FB1a of the fiber base material FB1 and a third end surface 13 of the first mold 10 in the width direction WD. Also, a gap GPb is formed between an end surface FB1b of the fiber base material FB1 and a fourth end surface 14 of the first mold 10 in the width direction WD.

The gap GPa and the gap GPb have arbitrary intervals in accordance with an individual difference of the fiber base material FB1 or an individual difference of the first mold 10. Thus, a spacer 26 and a spacer 27 are inserted in order to adjust each of the gap GPa and the gap GPb to have an appropriate interval. The gap GPa and the gap GPb are adjusted to have appropriate intervals for the purpose of forming intervals in consideration of thermal expansion and the like due to heating of the resin material RM in the curing process.

The spacer 26 is a member extending in a rod shape in the longitudinal direction LD and has a length in the width direction WD in accordance with the gap GPa. Similarly, the spacer 27 is a member extending in a rod shape in the longitudinal direction LD and has a length in the width direction WD in accordance with the gap GPb. A plurality of types of spacers 26 with mutually different lengths in the width direction WD are prepared, and a spacer 26 with a length in accordance with the gap GPa is selected and inserted into the gap GPa such that the gap GPa has a predetermined interval. Similarly, a plurality of types of spacers 27 with mutually different lengths in the width direction WD are prepared, and a spacer 27 with a length in accordance with the gap GPb is selected and inserted into the gap GPb such that the gap GPb has a predetermined interval.

The gap GPa and the gap GPb are measured in Step S104 (measurement process) described above. Also, the spacer 26 and the spacer 27 are inserted into the gap GPa and the gap GPb, respectively, in Step S105 (insertion process) described above.

Although the resin injection line 50 is provided below the first mold 10 and the suctioning line 40 is provided above the first mold 10 in the above description, another aspect is also conceivable. For example, the resin injection line 50 may be provided above the first mold 10, and the suctioning line 40 may be provided below the first mold 10.

Although the resin material RM is injected from the resin injection line 50 into the tightly closed space CS through pressure reduction in the tightly closed space CS in the above description, another aspect is also conceivable. For example, the resin material RM may be injected from the resin injection line 50 into the tightly closed space CS by the supply source 330 pressurizing the resin material RM and pressing the resin material RM out to the resin injection line 50.

The fiber reinforced composite material molding method described in the embodiments described above is recognized as follows, for example.

The fiber reinforced composite material molding method according to the present disclosure is a fiber reinforced composite material molding method for molding a composite material (200) with a first mold (10) and a second mold (20), the first mold including molding surface (10b) extending in a first direction (LD), the second mold being disposed in the first mold such that the second mold is movable in the first direction and including a contact surface (20b) that is brought into contact with the molding surface, the method including: a disposing process (S012) of disposing the second mold in the first mold such that the contact surface is brought into contact with the molding surface; a first placing process (S103) of placing a fiber base material (FB1) on the molding surface of the first mold in which the second mold is disposed; a measurement process (S104) of measuring a gap (GP) formed between the second mold and a second end portion (12) of the first mold in a state in which the fiber base material is in contact with a first end portion (11) of the first mold in the first direction and the second mold is in contact with the fiber base material; an insertion process (S105) of inserting, between the second mold and the second end portion (12) of the first mold, a spacer (25) with a length in the first direction in accordance with the gap measured in the measurement process; a tightly closing process (S107) of sealing the fiber base material in the first mold with a tightly closing member (30) and forming a tightly closed space (CS); and an injection process (S108) of injecting a resin material into the tightly closed space formed in the tightly closing process.

According to the composite material molding method in the present embodiment, the gap formed between the end surface of the second mold and the second end surface of the first mold is measured in the measurement process in the state in which the fiber base material is in contact with the first end surface of the first mold in the first direction and the molding surface of the second mold is in contact with the fiber base material. The gap is formed due to manufacturing errors or the like of the first mold and the fiber base material. If the composite material is molded by injecting the resin material to the fiber base material in a state in which the gap does not have an appropriate interval, a part including only the resin material is formed in the second end surface of the fiber base material in the first direction.

Thus, the spacer with a length in the first direction in accordance with the measured gap is inserted between the second mold and the second end portion of the first mold in the insertion process in the fiber reinforced composite material molding method according to the present disclosure. Since the gap is adjusted to have an appropriate interval through the insertion of the spacer into the gap, the resin material is injected into the tightly closed space in a state in which an appropriate interval is formed between the second mold and the second end portion of the first mold. Therefore, it is possible to curb formation of the part including only the resin material at the second end portion of the fiber base material in the first direction in the composite material.

The fiber reinforced composite material molding method according to the present disclosure is preferably configured such that the molding surface of the first mold includes a first molding surface on which a first fiber base material included in the fiber base material with a first width in a second direction that perpendicularly intersects the first direction is disposed and a second molding surface on which a second fiber base material included in the fiber base material with a second width that is wider than the first width in the second direction is disposed, and the method further includes: a second placing process of placing the second fiber base material on the second molding surface, in addition to the disposition of the first fiber base material on the first molding surface.

According to the composite material molding method in the above configuration, it is possible to form the composite material in which the first fiber base material and the second fiber base material are integrated with each other by placing the first fiber base material with the first width on the first molding surface of the first mold and placing the second fiber base material with the second width that is wider than the first width on the second molding surface of the first mold.

The fiber reinforced composite material molding method according to the present disclosure is preferably configured such that at least a part of the second mold that comes into contact with the fiber base material is formed of a member with stretchability.

It is possible to cause the second mold to stretch to follow a change in shape of the fiber base material even in a case in which the shape of the fiber base material changes in the injection process or the following process, by forming the part of the second mold that comes into contact with the fiber base material using a member with stretchability. Therefore, it is possible to prevent a gap that does not have an appropriate interval from being formed between the second mold and the second end portion of the first mold in the injection process and the following process.

The fiber reinforced composite material molding apparatus described in the embodiments described above is recognized as follows, for example.

The fiber reinforced composite material molding apparatus according to the present disclosure includes: a first mold that includes a molding surface, which extends in a first direction, on which a fiber base material is placed; a second mold that is disposed in the first mold such that the second mold is movable in the first direction, the second mold including a contact surface that is brought into contact with the molding surface; a spacer that is inserted into a gap formed between the second mold and a second end portion of the first mold in a state in which the fiber base material is in contact with a first end portion of the first mold in the first direction and the second mold is in contact with the fiber base material, the spacer having a length in the first direction in accordance with the gap; a tightly closing member that seals the fiber base material in the first mold and forms a tightly closed space; and a resin injecting portion that injects a resin material to the fiber base material sealed in the tightly closed space.

According to the composite material molding apparatus in the present disclosure, the gap formed between the end surface of the second mold and the second end surface of the first mold is measured in the measurement process in the state in which the fiber base material is in contact with the first end surface of the first mold in the first direction and the molding surface of the second mold is in contact with the fiber base material. The gap is formed due to manufacturing errors or the like of the first mold and the fiber base material. If the composite material is molded by injecting the resin material to the fiber base material in a state in which the gap does not have an appropriate interval, a part including only the resin material is formed in the second end surface of the fiber base material in the first direction.

In the fiber reinforced composite material molding apparatus according to the present disclosure, the spacer with the length in the first direction in accordance with the gap formed between the second mold and the second end portion of the first mold is inserted. Since the gap is adjusted to have an appropriate interval through the insertion of the spacer into the gap, the resin material is injected into the tightly closed space in a state in which an appropriate interval is formed between the second mold and the second end portion of the first mold. It is thus possible to curb formation of the part including only the resin material at the second end portion of the fiber base material in the first direction in the composite material.

The fiber reinforced composite material molding apparatus according to the present disclosure is preferably configured such that the molding surface of the first mold includes a first molding surface on which a first fiber base material included in the fiber base material with a first width in a second direction that perpendicularly intersects the first direction is disposed and a second molding surface on which a second fiber base material included in the fiber base material with a second width that is wider than the first width in the second direction is disposed.

According to the composite material molding apparatus in the above configuration, it is possible to form the composite material in which the first fiber base material and the second fiber base material are integrated with each other by placing the first fiber base material with the first width on the first molding surface of the first mold and placing the second fiber base material with the second width that is wider than the first width on the second molding surface of the first mold.

The fiber reinforced composite material molding apparatus according to the present disclosure is preferably configured such that at least a part of the second mold that comes into contact with the fiber base material is formed of a member with stretchability.

It is possible to cause the second mold to stretch to follow a change in shape of the fiber base material even in a case in which the shape of the fiber base material changes after the resin material is injected into the tightly closed space, by forming the part of the second mold that comes into contact with the fiber base material using the member with stretchability. It is thus possible to prevent a gap that does not have an appropriate interval from being formed between the second mold and the second end portion of the first mold after the resin material is injected into the tightly closed space.

## Claims

1. A fiber reinforced composite material molding method for molding a composite material (200) with a first mold (10) and a second mold (20),
the first mold (10) including a molding surface (10a,10b,10c) extending in a first direction (LD),
the second mold (20) being disposed in the first mold (10) such that the second mold (20) is movable in the first direction (LD) and including a contact surface (20b) that is brought into contact with the molding surface (10a,10b,10c),
the method comprising:
a disposing process (S102) of disposing the second mold (20) in the first mold (10) such that the contact surface (20b) is brought into contact with the molding surface (10b);
a first placing process (S103) of placing a fiber base material (FB1) on the molding surface (10a,10b,10c) of the first mold (10) in which the second mold (20) is disposed;
a measurement process (S104) of measuring a gap (GP) formed between the second mold (20) and a second end portion (12) of the first mold (10) in a state in which the fiber base material (FB1,FB2) is in contact with a first end portion (11) of the first mold (10) in the first direction (LD) and the second mold (20) is in contact with the fiber base material (FB1,FB2);
an insertion process (S105) of inserting, between the second mold (20) and the second end portion (12) of the first mold (10), a spacer (25) with a length in the first direction (LD) in accordance with the gap (GP) measured in the measurement process (S104);
a tightly closing process (S107) of sealing the fiber base material (FB1, FB2) in the first mold (10) with a tightly closing member (30) and forming a tightly closed space (CS); and
an injection process (S108) of injecting a resin material into the tightly closed space (CS) formed in the tightly closing process (S107).

2. The fiber reinforced composite material molding method according to claim 1,
wherein the molding surface (10a,10b,10c) of the first mold (10) includes a first molding surface (10a) on which a first fiber base material (FB1) included in the fiber base material (FB1,FB2) with a first width (W1) in a second direction (WD) that perpendicularly intersects the first direction (LD) is disposed and a second molding surface (10c) on which a second fiber base material (FB2) included in the fiber base material (FB1, FB2) with a second width (W2) that is wider than the first width (W1) in the second direction (WD) is disposed, and
the method further comprising:
a second placing process (S106) of placing the second fiber base material (FB2) on the second molding surface (10c).

3. The fiber reinforced composite material molding method according to claim 1 or 2, wherein at least a part of the second mold (20) that comes into contact with the fiber base material (FB1, FB2) is formed of a member with stretchability.

4. A system comprising a fiber reinforced composite material molding apparatus (100) and fiber base material (FB1, FB2) comprising:
a first mold (10) that includes a molding surface (10a,10b,10c), which extends in a first direction (LD), on which a fiber base material (FB1, FB2) is placed;
a second mold (20) that is disposed in the first mold (10) such that the second mold (20) is movable in the first direction (LD), the second mold (20) including a contact surface (20b) that is brought into contact with the molding surface (10b);
a spacer (25) that is inserted into a gap (GP) formed between the second mold (20) and a second end portion (12) of the first mold (10) in a state in which the fiber base material (FB1,FB2) is in contact with a first end portion (11) of the first mold (10) in the first direction (LD) and the second mold (20) is in contact with the fiber base material (FB1), the spacer (25) having a length in the first direction (LD) in accordance with the gap (GP);
a tightly closing member (30) that seals the fiber base material (FB1, FB2) in the first mold (10) and forms a tightly closed space (CS); and
a resin injecting portion (40) that injects a resin material to the fiber base material (FB1, FB2) sealed in the tightly closed space (CS).

5. The system according to claim 4, wherein the molding surface (10a,10b,10c) of the first mold (10) includes a first molding surface (10b) on which a first fiber base material (FB1) included in the fiber base material (FB1, FB2) with a first width (W1) in a second direction (WD) that perpendicularly intersects the first direction (LD) is disposed and a second molding surface (10c) on which a second fiber base material (FB2) included in the fiber base material (FB1,FB2) with a second width (W2) that is wider than the first width (W1) in the second direction (WD) is disposed.

6. The system according to claim 4 or 5, wherein at least a part of the second mold (20) that comes into contact with the fiber base material (FB1) is formed of a member with stretchability.

## Patentansprüche

1. Verfahren zum Formen eines faserverstärkten Verbundstoffmaterials (200) mit einer ersten Form (10) und einer zweiten Form (20),
wobei die erste Form (10) eine sich in einer ersten Richtung (LD) erstreckende Formoberfläche (10a, 10b, 10c) einschließt,
die zweite Form (20) in der ersten Form (10) angeordnet ist, sodass die zweite Form (20) in der ersten Richtung (LD) beweglich ist und eine Kontaktoberfläche (20b) einschließt, die mit der Formoberfläche (10a, 10b, 10c) in Kontakt gebracht wird,
wobei das Verfahren umfasst:
einen Anordnungsprozess (S102) zum Anordnen der zweiten Form (20) in der ersten Form (10), sodass die Kontaktoberfläche (20b) mit der Formoberfläche (10b) in Kontakt gebracht wird;
einen ersten Platzierungsprozess (S103) zum Platzieren eines Faserbasismaterials (FB1) auf der Formoberfläche (10a, 10b, 10c) der ersten Form (10), in der die zweite Form (20) angeordnet ist;
einen Messprozess (S104) zum Messen eines zwischen der zweiten Form (20) und einem zweiten Endabschnitt (12) der ersten Form (10) gebildeten Spalts (GP) in einem Zustand, in dem das Faserbasismaterial (FB1, FB2) mit einem ersten Endabschnitt (11) der ersten Form (10) in der ersten Richtung (LD) in Kontakt ist, und die zweite Form (20) mit dem Faserbasismaterial (FB1, FB2) in Kontakt ist;
einen Einfügeprozess (S105) zum Einfügen, zwischen der zweiten Form (20) und dem zweiten Endabschnitt (12) der ersten Form (10), eines Abstandshalters (25) mit einer Länge in der ersten Richtung (LD) entsprechend dem im Messprozess (S104) gemessenen Spalt (GP);
einen fest verschließenden Prozess (S107) zum Abdichten des Faserbasismaterials (FB1, FB2) in der ersten Form (10) mit einem fest verschließenden Element (30) und Bilden eines fest verschlossenen Raumes (CS) und
einen Einpritzprozess (S108) zum Einspritzen eines Harzmaterials in den fest verschlossenen Raum (CS), der im fest verschließenden Prozess (S107) gebildet wird.

2. Verfahren zum Formen eines faserverstärkten Verbundstoffmaterials nach Anspruch 1,
wobei die Formoberfläche (10a,10b,10c) der ersten Form (10) eine erste Formoberfläche (10a) einschließt, auf der ein erstes Faserbasismaterial (FB1), einschließlich des Faserbasismaterials (FB1, FB2), mit einer ersten Breite (W1) in einer zweiten Richtung (WD), welche die erste Richtung (LD) senkrecht schneidet, angeordnet ist, und eine zweite Formoberfläche (10c), auf der ein zweites Faserbasismaterial (FB2), einschließlich des Faserbasismaterials (FB1, FB2), mit einer zweiten Breite (W2), die breiter ist als die erste Breite (W1) in der zweiten Richtung (WD), angeordnet ist, und
das Verfahren weiter umfasst:
einen zweiten Platzierungsprozess (S106) zum Platzieren des zweiten Faserbasismaterials (FB2) auf der zweiten Formoberfläche (10c).

3. Verfahren zum Formen eines faserverstärkten Verbundstoffmaterials nach Anspruch 1 oder 2, wobei mindestens ein Teil der zweiten Form (20), der mit dem Faserbasismaterial (FB1, FB2) in Kontakt kommt, aus einem Element mit Dehnbarkeit gebildet ist.

4. System, das eine Vorrichtung (100) zum Formen eines faserverstärktes Verbundstoffmaterials und Faserbasismaterials (FB1, FB2) umfasst, umfassend:
eine erste Form (10), die eine Formoberfläche (10a, 10b, 10c) einschließt, die sich in einer ersten Richtung (LD) erstreckt, auf der ein Faserbasismaterial (FB1, FB2) platziert wird;
eine zweite Form (20), die in der ersten Form (10) angeordnet ist, sodass die zweite Form (20) in der ersten Richtung (LD) beweglich ist, wobei die zweite Form (20) eine Kontaktoberfläche (20b) einschließt, die mit der Formoberfläche (10b) in Kontakt gebracht wird;
einen Abstandshalter (25), der in einen Spalt (GP), der zwischen der zweiten Form (20) und einem zweiten Endabschnitt (12) der ersten Form (10) gebildet ist, in einem Zustand eingefügt wird, in dem das Faserbasismaterial (FB1, FB2) in der ersten Richtung (LD) in Kontakt mit einem ersten Endabschnitt (11) der ersten Form (10) ist und die zweite Form (20) mit dem Faserbasismaterial (FB1) in Kontakt ist, wobei der Abstandhalter (25) eine Länge in der ersten Richtung (LD) entsprechend dem Spalt (GP) aufweist;
ein fest verschließendes Element (30), welches das Faserbasismaterial (FB1, FB2) in der ersten Form (10) abdichtet und einen fest verschlossenen Raum (CS) bildet; und
einen Harzeinspritzabschnitt (40), der ein Harzmaterial in das in dem fest verschlossenen Raum (CS) abgedichtete Faserbasismaterial (FB1, FB2) einspritzt.

5. System nach Anspruch 4, wobei die Formoberfläche (10a, 10b, 10c) der ersten Form (10) eine erste Formoberfläche (10b) einschließt, auf der ein erstes Faserbasismaterial (FB1), einschließlich des Faserbasismaterials (FB1, FB2), mit einer ersten Breite (W1) in einer zweiten Richtung (WD), welche die erste Richtung (LD) senkrecht schneidet, angeordnet ist, und eine zweite Formoberfläche (10c), auf der ein zweites Faserbasismaterial (FB2), einschließlich des Faserbasismaterials (FB1, FB2), mit einer zweiten Breite (W2), die breiter ist als die erste Breite (W1) in der zweiten Richtung (WD), angeordnet ist.

6. System nach Anspruch 4 oder 5, wobei mindestens ein Teil der zweiten Form (20), der mit dem Faserbasismaterial (FB1) in Kontakt kommt, aus einem Element mit Dehnbarkeit gebildet ist.

## Revendications

1. Procédé de moulage de matériau composite renforcé par des fibres pour mouler un matériau composite (200) à l'aide d'un premier moule (10) et d'un second moule (20),
le premier moule (10) incluant une surface de moulage (10a, 10b, 10c) s'étendant dans une première direction (LD)
le second moule (20) étant disposé dans le premier moule (10) de sorte que le second moule (20) soit mobile dans la première direction (LD) et incluant une surface de contact (20b) qui est mise en contact avec la surface de moulage (10a, 10b, 10c), le procédé comprenant :
un processus de disposition (S102) comprenant la disposition du second moule (20) dans le premier moule (10) de sorte que la surface de contact (20b) soit mise en contact avec la surface de moulage (10b) ;
un premier processus de placement (S103) comprenant le placement d'un matériau (FB1) à base de fibres sur la surface de moulage (10a, 10b, 10c) du premier moule (10) dans lequel le second moule (20) est disposé ;
un processus de mesure (S104) comprenant la mesure d'un écart (GP) formé entre le second moule (20) et une seconde partie d'extrémité (12) du premier moule (10) dans un état dans lequel le matériau (FB1, FB2) à base de fibres est en contact avec une première partie d'extrémité (11) du premier moule (10) dans la première direction (LD) et le second moule (20) est en contact avec le matériau (FB1, FB2) à base de fibres ;
un processus d'insertion (S105) comprenant l'insertion, entre le second moule (20) et la seconde partie d'extrémité (12) du premier moule (10), d'une entretoise (25) avec une longueur dans la première direction (LD) conformément à l'écart (GP) mesuré dans le processus de mesure (S104) ;
un processus de fermeture étanche (S107) comprenant le scellage du matériau (FB1, FB2) à base de fibres dans le premier moule (10) avec un élément de fermeture étanche (30) et la formation d'un espace fermé étanche (CS) et
un processus d'injection (S108) comprenant l'injection d'un matériau de résine dans l'espace fermé étanche (CS) formé dans le processus de fermeture étanche (S107).

2. Procédé de moulage de matériau composite renforcé par des fibres selon la revendication 1,
dans lequel la surface de moulage (10a, 10b, 10c) du premier moule (10) inclut une première surface de moulage (10a) sur laquelle un premier matériau (FB1) à base de fibres inclus dans le matériau (FB1, FB2) à base de fibres avec une première largeur (W1) dans une seconde direction (WD) qui croise perpendiculairement la première direction (LD) est disposé et une seconde surface de moulage (10c) sur laquelle un second matériau (FB2) à base de fibres inclus dans le matériau (FB1, FB2) à base de fibres avec une seconde largeur (W2) qui est plus large que la première largeur (W1) dans la seconde direction (WD) est disposé, et
le procédé comprenant en outre :
un second processus de placement (S106) comprenant le placement du second matériau (FB2) à base de fibres sur la seconde surface de moulage (10c).

3. Procédé de moulage de matériau composite renforcé par des fibres selon la revendication 1 ou la revendication 2, dans lequel au moins une partie du second moule (20) qui entre en contact avec le matériau (FB1, FB2) à base de fibres est formée d'un élément présentant une élasticité.

4. Système comprenant un appareil de moulage (100) de matériau composite renforcé par des fibres et un matériau (FB1, FB2) à base de fibres comprenant :
un premier moule (10) qui inclut une surface de moulage (10a, 10b, 10c), qui s'étend dans une première direction (LD), sur laquelle un matériau (FB1, FB2) à base de fibres est placé ;
un second moule (20) qui est disposé dans le premier moule (10) de sorte que le second moule (20) soit mobile dans la première direction (LD), le second moule (20) incluant une surface de contact (20b) qui est mise en contact avec la surface de moulage (10b) ;
une entretoise (25) qui est insérée dans un espace (GP) formé entre le second moule (20) et une seconde partie d'extrémité (12) du premier moule (10) dans un état dans lequel le matériau (FB1, FB2) à base de fibres est en contact avec une première partie d'extrémité (11) du premier moule (10) dans la première direction (LD) et le second moule (20) est en contact avec le matériau (FB1) à base de fibres, l'entretoise (25) présentant une longueur dans la première direction (LD) conformément à l'espace (GP) ;
un élément de fermeture étanche (30) qui scelle le matériau (FB1, FB2) à base de fibres dans le premier moule (10) et forme un espace fermé étanche (CS), et
une partie d'injection de résine (40) qui injecte un matériau de résine dans le matériau (FB1, FB2) à base de fibres scellé dans l'espace fermé étanche (CS).

5. Système selon la revendication 4, dans lequel la surface de moulage (10a, 10b, 10c) du premier moule (10) inclut une première surface de moulage (10b) sur laquelle un premier matériau (FB1) à base de fibres inclus dans le matériau (FB1, FB2) à base de fibres avec une première largeur (W1) dans une seconde direction (WD) qui croise perpendiculairement la première direction (LD) est disposé et une seconde surface de moulage (10c) sur laquelle un second matériau (FB2) à base de fibres inclus dans le matériau (FB1, FB2) à base de fibres avec une seconde largeur (W2) qui est plus large que la première largeur (W1) dans la seconde direction (WD) est disposé.

6. Système selon la revendication 4 ou la revendication 5, dans lequel au moins une partie du second moule (20) qui entre en contact avec le matériau (FB1) à base de fibres est formée d'un élément présentant une élasticité.
